# EUROPEAN PATENT APPLICATION

(11) **EP 3 090 633 A1**
(43) Date of publication of application: **09.11.2016**
(21) Application number: 16168627.4
(22) Date of filing: 06.05.2016
(51) Int. Cl.: A22C 13/02

(54) **MULTI-ROD SHIRRING MACHINE**

(30) Priority: 08.05.2015 CN 201510234464
(71) Applicant: Autodesign Automation Equipment Co., Ltd., Shenzhen, Guangdong Province, 518105 (CN)
(72) Inventor: MO, Shaonan, Shenzhen, Guangdong Province, 518105 (CN)
(74) Representative: Laufhütte, Dieter

(57) **Abstract**

This invention discloses a multi-rod shirring machine, which comprises a rack, and a shirring mechanism mounted on the rack, a shirring rod, a cutting mechanism, a multi-rod receiving mechanism, a moving clamp for moving the shirring material, and a first rod-supporting clamp and a second rod-supporting clamp for clamping the shirring rod, which are mounted on the rack. Two ends of the shirring rod are provided with a first air inlet and a first air outlet respectively, both the first air inlet and the first air outlet being in communication with a first inner cavity; two ends of the receiving rod are provided with a second air inlet and a second air outlet respectively, both the second air inlet and the second air outlet being in communication with a second inner cavity. An inflation pump is connected to the second air inlet. When the receiving rod is in butt joint with the shirring rod, air is conveyed to the shirring rod from the receiving rod, thus to finish the inflation process. The conventional practice of inflating through a vacuum pump has been replaced by the present invention with simple structure, effective reduction in costs, and improvement in efficiency of automatic production, which is suitable for marketing.

## Description

### TECHNICAL FIELD

The present invention relates to the technical field of processing tubular packaging material, and in particular to a multi-rod shirring machine with simple structure.

### BACKGROUND

Tubular packaging material, especially tubular thin film, is mostly applied to the sealing and storing of filled stuffing in the absence of air. For example, gunpowder charging requires encapsulation of gunpowder packaging material, chemical fertilizer to be buried underground is usually sealed with an infiltrating and self-decomposing fibrin, and a casing is often used for sealing the filled meat in the field of food processing. Before the filling, the tubular packaging material needs to be shirred.

Conventionally, the multi-rod shirring machine generally comprises a shirring rod, a shirring mechanism, a cutting mechanism and a multi-rod receiving mechanism. The shirring rod has an inner cavity of hollow structure and an air vent in communication with the external environment. The shirring mechanism comprises a vacuum chamber and a shirring head located behind the vacuum chamber, one end of the shirring rod inserting into the vacuum chamber, which is in communication with a vacuum pump. When the vacuum pump works, a negative pressure is formed within the vacuum chamber and the inner cavity of the shirring rod is communicated with the atmosphere, whereby the packaging material to be shirred is inflated and bulged for the next step of shirring. However, inflation with vacuum chamber has high requirements for the sealing performance of the product, together with complicated structure and high costs, which does not fit the need of the mass industrial production.

### SUMMARY

In view of the deficiency in the conventional art, the object of the present invention is to provide a multi-rod shirring machine with simple structure, effective reduction in costs, and improvement in efficiency of automatic production.

In order to realize the object, the present invention adopts the following technical solutions:

A multi-rod shirring machine comprises: a rack, and a shirring mechanism, a shirring rod, a cutting mechanism, a multi-rod receiving mechanism, a moving clamp for moving the shirring material, and a first rod-supporting clamp and a second rod-supporting clamp for clamping the shirring rod, which are mounted on the rack.

The shirring mechanism comprises a case body and a shirring head located behind the case body, an entrance being provided in the front of the case body and an exit being provided in the rear of the case body, at least two feeding wheel sets being disposed inside the case body, each of the feeding wheel sets including a top roller and a bottom roller cooperating with each other.

The shirring rod sequentially penetrates the outlet of the case body and the shirring head, and the front end of the shirring rod is located between the top roller and the bottom roller, the shirring rod having a first inner cavity that is hollow and a first air inlet and a first air outlet that are respectively disposed on two ends thereof, both the first air inlet and the first air outlet being in communication with the first inner cavity.

The cutting mechanism is disposed behind the shirring mechanism.

The multi-rod receiving mechanism has a receiving station, a cutting station, at least one compressing station and at least one waiting-for-receiving station, a cutting means being disposed on the cutting station, a compression sleeve being disposed directly ahead of the compressing station, each of the receiving station, the cutting station, the compressing station and the waiting-for-receiving station including a receiving rod, the receiving rod having a second inner cavity that is hollow and a second air inlet and a second air outlet that are respectively disposed on two ends thereof, both the second air inlet and the second air outlet being in communication with the second inner cavity. An inflation pump is connected to the second air inlet. The receiving rods are annularly disposed on a turntable that is controlled by a driving means to move forwards or backwards. A driving cylinder for driving the turntable to rotate is also provided on the rack.

As a preferable solution, an air replenishment means is disposed on the second rod-supporting clamp and communicates between an air replenishment pump and the first air inlet.

As a preferable solution, the moving clamp is disposed on a lead screw, one end of the lead screw being provided with a driving motor for driving the lead screw to rotate.

As a preferable solution, at least two rod-supporting wheel sets are further included, each of the rod-supporting wheel sets including a top rod-supporting wheel and a bottom rod-supporting wheel cooperating with each other, the shirring rod passing through between the top rod-supporting wheel and the bottom rod-supporting wheel.

As a preferable solution, an unwrapping mechanism and a metering pressure roller mechanism are further included, which are both disposed at the front end of the shirring mechanism.

As a preferable solution, the cutting mechanism has a through hole at the center thereof, through which the shirring rod penetrates, a retaining clip being disposed at the through hole and comprising an upper retaining piece and a lower retaining piece.

Compared with the prior art, the present invention has prominent features and advantageous effects as specifically discussed below.

I. Two ends of the shirring rod are provided with a first air inlet and a first air outlet respectively, both the first air inlet and the first air outlet being in communication with a first inner cavity; two ends of the receiving rod are provided with a second air inlet and a second air outlet respectively, both the second air inlet and the second air outlet being in communication with a second inner cavity. An inflation pump is connected to the second air inlet. When the receiving rod is in butt joint with the shirring rod, air is conveyed to the shirring rod from the receiving rod, thus to finish the inflation process. The conventional practice of inflating through a vacuum pump has been replaced by the present invention with simple structure, effective reduction in costs, and improvement in efficiency of automatic production.

II. An air replenishment means is disposed on the second rod-supporting clamp and connected to an air replenishment pump, which can replenish air in time when the receiving rod is separated from the shirring rod, so as to ensure higher working efficiency and to be suitable for marketing.

In order to illustrate the structural features and effects of the present invention more clearly, the embodiments of the invention will be described in detail below with reference to the drawings.

### BRIEF DESCRIPTION OF THE DRAWINGS

Fig. 1 is a structural schematic view of the preferable embodiment of the present invention;
Fig. 2 is a partially enlarged schematic view at A of Fig. 1;
Fig. 3 is a schematic view at B of Fig. 1;
Fig. 4 is a structural schematic view from the other angle of the preferable embodiment of the present invention;
Fig. 5 is a front view of the preferable embodiment of the present invention.

Description of reference numerals:

| | | | |
|---|---|---|---|
| 1 | rack, | 2 | shirring mechanism, |
| 21 | case body, | 211 | air inlet, |
| 22 | shirring head | | |
| 23 | feeding wheel set, | 3 | shirring rod, |
| 4 | cutting mechanism | 41 | through hole |
| 5 | multi-rod receiving mechanism | 51 | receiving rod |
| 52 | turntable | 6 | moving clamp |
| 61 | lead screw | 62 | driving motor |
| 7 | first rod-supporting clamp | 8 | second rod-supporting clamp |
| 9 | unwrapping mechanism | 10 | metering pressure roller mechanism |
| 11 | retaining clip | 12 | rod-supporting wheel set |
| 13 | driving cylinder | 14 | cutting means |
| 15 | compression sleeve | | |

### DETAILED DESCRIPTION

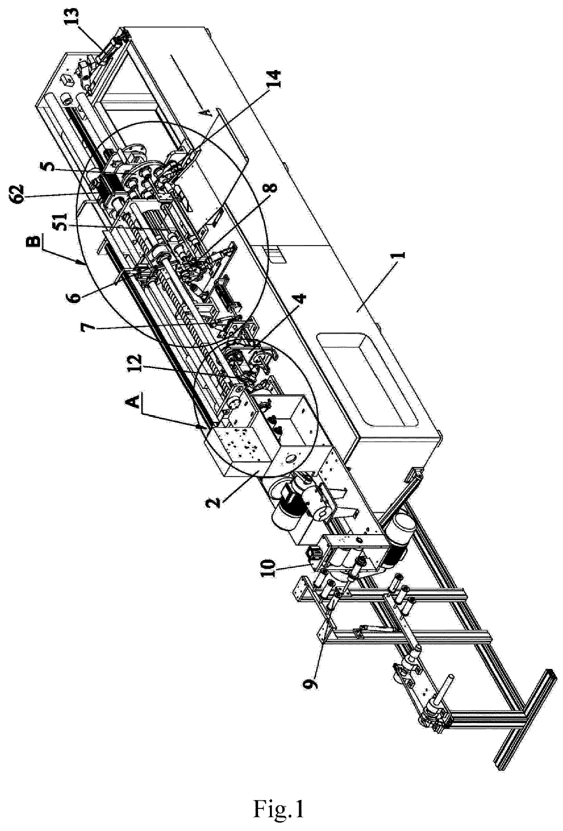

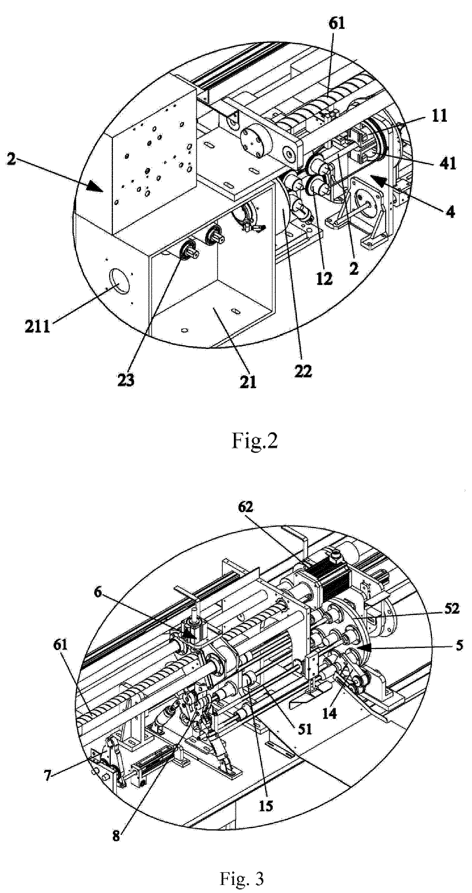

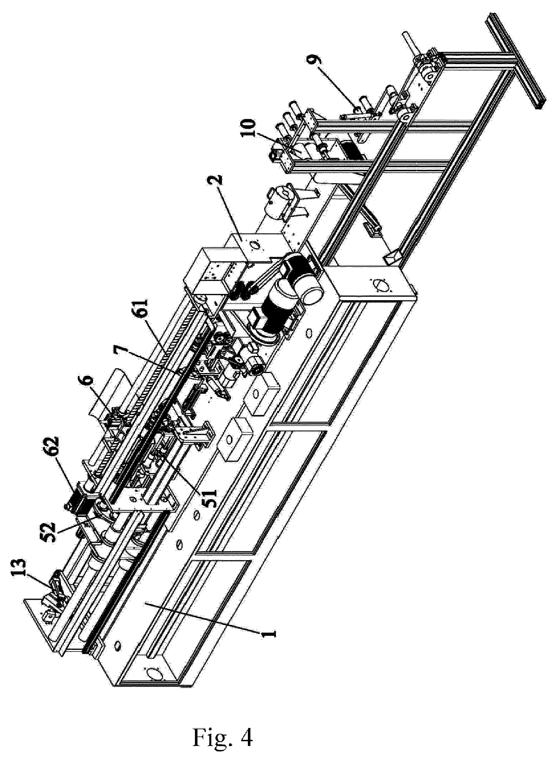

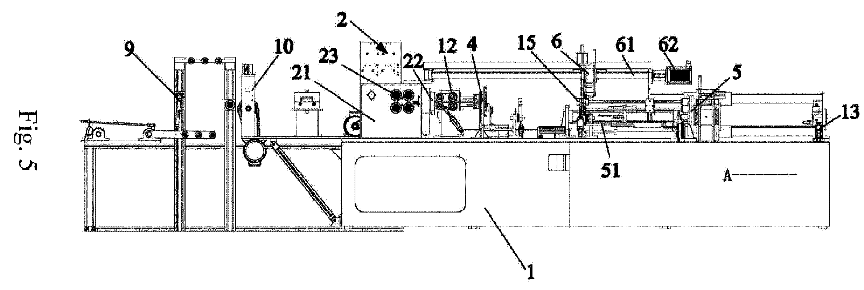

With reference to Fig. 1 to Fig. 5, a structure of the preferable embodiment of the present invention is shown, comprising a rack 1, and a shirring mechanism 2, a shirring rod 3, a cutting mechanism 4, a multi-rod receiving mechanism 5, a moving clamp 6, a first rod-supporting clamp 7 and a second rod-supporting clamp 8, which are mounted on the rack 1.

The shirring mechanism 2 comprises a case body 21 and a shirring head 22 located behind the case body 21, an entrance 211 being provided in the front of the case body 21 and an exit (not shown) being provided in the rear of the case body 21, the entrance 211 and the exit 212 being provided for allowing passage of the shirring material. At least two feeding wheel sets 23 are disposed inside the case body 21, each of the feeding wheel sets 23 including a top roller and a bottom roller cooperating with each other. The feeding wheel sets 23 are provided for pushing the shirring material into the shirring head 22, and may controll the shirring rod 3 to be positioned at the center of the shirring head 22.

An unwrapping mechanism 9 and a metering pressure roller mechanism 10 are disposed at the front end of the shirring mechanism 2. The metric length of the shirring material may be calculated by the perimeter of the number of turns of the metering pressure roller mechanism 10.

The shirring rod 3 sequentially penetrates the exit of the case body 21 and the shirring head 22, and the front end of the shirring rod 3 is located between the top roller and the bottom roller. The shirring rod 3 has a first inner cavity (not shown) that is hollow and a first air inlet (not shown) and a first air outlet (not shown) that are respectively disposed on two ends thereof, both the first air inlet and the first air outlet being in communication with the first inner cavity.

The cutting mechanism 4 is disposed behind the shirring mechanism 3. The cutting mechanism 4 has a through hole 41 at the center thereof, through which the shirring rod 3 penetrates. A retaining clip 11 is disposed at the through hole 41 and comprises an upper retaining piece and a lower retaining piece. When the cutting mechanism 4 performs cutting operation, the retaining clip 11 may prevent the shirring material from advancing along the shirring rod 3.

The rack 1 is mounted with at least two rod-supporting wheel sets 12, each of the rod-supporting wheel sets 12 including a top rod-supporting wheel and a bottom rod-supporting wheel cooperating with each other, the shirring rod 3 passing through between the top rod-supporting wheel and the bottom rod-supporting wheel. The rod-supporting wheel sets 12 may control the shirring rod 3 at a relative centeral position of the shirring head 22, and may push the shirred shirring material to move backwards.

The moving clamp 6 is used for moving the shirring material having been cut to the multi-rod receiving mechanism 5. To be specific, the moving clamp 6 is disposed on a lead screw 61, one end of the lead screw 61 being provided with a driving motor 62 for driving the lead screw 61 to rotate.

Both the first rod-supporting clamp 7 and the second rod-supporting clamp 8 are used for clamping and fixing the shirring rod 2 so as to prevent the shirring rod 2 from moving back-and-forth. When the first rod-supporting clamp 7 clamps the shirring rod 2, the second rod-supporting clamp 8 is in an open state; when the second rod-supporting clamp 8 clamps the shirring rod 2, the first rod-supporting clamp 7 is in an open state. An air replenishment means is disposed on the second rod-supporting clamp 8 and communicates between an air replenishment pump (not shown) and the first air inlet, so as to replenish air in time when the multi-rod receiving mechanism 5 moves backwards.

The multi-rod receiving mechanism 5 has a receiving station, a cutting station, at least one compressing station and at least one waiting-for-receiving station. In the present embodiment, there are three compressing stations and one waiting-for-receiving station. Each of the receiving station, the cutting station, the compressing station and the waiting-for-receiving station includes a receiving rod 51. The receiving rod 51 has a second inner cavity (not shown) that is hollow and a second air inlet (not shown) and a second air outlet (not shown) that are respectively disposed on two ends thereof, both the second air inlet and the second air outlet being in communication with the second inner cavity. An inflation pump is connected to the second air inlet. When the receiving rod 51 advances to be in butt joint with the shirring rod 3, the receiving rod 51 may inflate the shirring rod 3, whereby the shirring material is inflated and bulged for the consequent shirring process. The plurality of receiving rods 51 is disposed on a turntable 52 that is controlled by a driving means (not shown) to move forwards or backwards. The rack 1 is also provided with a driving cylinder 13 for driving the turntable 52 to rotate. A cutting means 14 is disposed on the cutting station and peels off the shirring material on the receiving rod 51 on the cutting station, so as to finish the cutting operation. A compression sleeve 15 is disposed directly ahead of the compressing station. In the present embodiment, there are three compression sleeves 15 having gradually decreased lengths. When the driving means drives the turntable 52 to move forwards, the shirring material on the receiving rod 51 on the compressing station is gradually compressed, thus to achieve good compressing and shaping effect.

The working process of the present invention is as follows:

Firstly, the shirring material passes through the entrance 211 of the case body and sleeves on the front end of the shirring rod 3. In an initial state, the receiving rod 51 on the receiving station protrudes forwards to be in butt joint with the rear end of the shirring rod 3, and to initiate the inflation pump, such that the shirring material is inflated and bulged and enters into the shirring head 22, so as to be shirred.

Secondly, the shirring material having been shirred moves backwards under the action of the rod-supporting wheel sets 12, and the cutting mechanism 4 cuts off the shirring material having been shirred after a predetermined length.

Then, the moving clamp 6 under the action of the driving motor 62 moves the shirring material having been cut to the receiving rod 51 on the receiving station. When the moving clamp 6 passes the first rod-supporting clamp 7, the first rod-supporting clamp 7 is opened while the second rod-supporting clamp 8 clamps the shirring rod 3; when the moving clamp 6 passes the second rod-supporting clamp 8, the second rod-supporting clamp 8 is opened while the first rod-supporting clamp 7 clamps the shirring rod 3.

And then, the multi-rod receiving mechanism 5 moves backwards such that the receiving rod 51 on the receiving station leaves away from the shirring rod 3. The driving cylinder 13 drives the turntable 52 to rotate at such an angle that the receiving rod 51 on the receiving station moves onto the compressing station, the receiving rod 51 on the compressing station moves onto the cutting station, the receiving rod 51 on the cutting station moves onto the waiting-for-receiving station, and the receiving rod 51 on the waiting-for-receiving station moves onto the receiving station. When the multi-rod receiving mechanism 5 moves backwards, the air replenishement pump starts to replenish air for the shirring rod 3. In this case, the shirring material will not be deflated because of the cease of inflation, and the efficiency will be improved.

Finally, the multi-rod receiving mechanism 5 moves forwards such that the receiving rod 51 on the receiving station is again in butt joint with the shirring rod 3. At the same time, the receiving rod 51 on the compressing station interacts with the compression sleeve 15 such that the shirring material is compressed, and the shirring material on the cutting station is peeled off by the cutting means 14, thus to finish the cutting operation.

To sum up, the gist of design of the present invention is as follows: two ends of the shirring rod are provided with a first air inlet and a first air outlet respectively, both the first air inlet and the first air outlet being in communication with a first inner cavity; two ends of the receiving rod are provided with a second air inlet and a second air outlet respectively, both the second air inlet and the second air outlet being in communication with a second inner cavity. An inflation pump is connected to the second air inlet. When the receiving rod is in butt joint with the shirring rod, air is conveyed to the shirring rod from the receiving rod, thus to finish the inflation process. The conventional practice of inflating through a vacuum pump has been replaced by the present invention with simple structure, effective reduction in costs, and improvement in efficiency of automatic production. An air replenishment means is disposed on the second rod-supporting clamp and connected to an air replenishment pump, which can replenish air in time when the receiving rod is separated from the shirring rod, so as to ensure higher working efficiency and to be suitable for marketing.

It is to be understood that the above discussion is a description of preferable embodiments of the present invention only, and is not limitative of the protection scope of the present invention. Any minor revision, equivalent change or modification based on the substance of the invention is intended to be included within the scope of the technical solution of the present invention.

## Claims

1. A multi-rod shirring machine, comprises:
a rack, and
a shirring mechanism, a shirring rod, a cutting mechanism, a multi-rod receiving mechanism, a moving clamp for moving the shirring material, and a first rod-supporting clamp and a second rod-supporting clamp for clamping the shirring rod, which are mounted on the rack;
the shirring mechanism comprises a case body and a shirring head located behind the case body, an entrance being provided in the front of the case body and an exit being provided in the rear of the case body, at least two feeding wheel sets being disposed inside the case body, each of the feeding wheel sets including a top roller or top rollers and a bottom roller or top rollers cooperating with each other;
the shirring rod sequentially penetrates the exit of the case body and the shirring head, and the front end of the shirring rod is located between the top roller(s) and the bottom roller(s), the shirring rod having a first inner cavity that is hollow and a first air inlet and a first air outlet that are respectively disposed on two ends thereof, both the first air inlet and the first air outlet being in communication with the first inner cavity;
the cutting mechanism is disposed behind the shirring mechanism;
the multi-rod receiving mechanism has a receiving station, a cutting station, at least one compressing station and at least one waiting-for-receiving station, a cutting means being disposed on the cutting station, a compression sleeve being disposed directly ahead of the compressing station, each of the receiving station, the cutting station, the compressing station and the waiting-for-receiving station including a receiving rod, the receiving rod having a second inner cavity that is hollow and a second air inlet and a second air outlet that are respectively disposed on two ends thereof, both the second air inlet and the second air outlet being in communication with the second inner cavity; an inflation pump is connected to the second air inlet; the receiving rods are annularly disposed on a turntable that is controlled by a driving means to move forwards or backwards; the rack is provided with a driving cylinder for driving the turntable to rotate.

2. The multi-rod shirring machine according to claim 1, wherein an air replenishment means is disposed on the second rod-supporting clamp and communicates between an air replenishment pump and the first air inlet.

3. The multi-rod shirring machine according to claim 1, wherein the moving clamp is disposed on a lead screw, one end of the lead screw being provided with a driving motor for driving the lead screw to rotate.

4. The multi-rod shirring machine according to claim 1, wherein it further comprises at least two rod-supporting wheel sets, each of the rod-supporting wheel sets including a top rod-supporting wheel and a bottom rod-supporting wheel cooperating with each other, the shirring rod passing through between the top rod-supporting wheel and the bottom rod-supporting wheel.

5. The multi-rod shirring machine according to claim 1, wherein it further comprises an unwrapping mechanism and a metering pressure roller mechanism, which are both disposed at the front end of the shirring mechanism.

6. The multi-rod shirring machine according to claim 1, wherein the cutting mechanism has a through hole at the center thereof, through which the shirring rod penetrates, a retaining clip being disposed at the through hole and comprising an upper retaining piece and a lower retaining piece.
